(19) **Europäisches Patentamt / European Patent Office / Office européen des brevets**

(11) **EP 3 148 951 B1**

(12) # FASCICULE DE BREVET EUROPEEN

(45) Date de publication et mention de la délivrance du brevet:
**14.08.2019 Bulletin 2019/33**

(21) Numéro de dépôt: **15725809.6**

(22) Date de dépôt: **27.04.2015**

(51) Int Cl.:
*C03C 25/10* (2018.01)     *C03C 25/32* (2018.01)
*C03C 25/1095* (2018.01)    *C03C 13/06* (2006.01)
*C03C 25/321* (2018.01)    *D04H 1/4209* (2012.01)
*D04H 1/587* (2012.01)     *D04H 1/64* (2012.01)
*D04H 1/4218* (2012.01)    *C09J 101/00* (2006.01)
*C09J 103/02* (2006.01)    *C09J 105/00* (2006.01)
*C08K 5/05* (2006.01)      *C08K 5/092* (2006.01)
*C09D 103/02* (2006.01)    *C08L 91/00* (2006.01)

(86) Numéro de dépôt international:
**PCT/FR2015/051135**

(87) Numéro de publication internationale:
**WO 2015/181458 (03.12.2015 Gazette 2015/48)**

(54) **COMPOSITION DE LIANT POUR LAINE MINERALE**

BINDEMITTELZUSAMMENSETZUNG FÜR MINERALWOLLE

BINDER COMPOSITION FOR MINERAL WOOL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.05.2014 FR 1454885**

(43) Date de publication de la demande:
**05.04.2017 Bulletin 2017/14**

(73) Titulaire: **Saint-Gobain Isover**
**92400 Courbevoie (FR)**

(72) Inventeurs:
• **OBERT, Edouard**
**60700 Fleurines (FR)**

• **SAVONNET, Marie**
**75018 Paris (FR)**

(74) Mandataire: **Saint-Gobain Recherche**
**Département Propriété Industrielle**
**39 Quai Lucien Lefranc**
**93300 Aubervilliers (FR)**

(56) Documents cités:
WO-A1-02/20622      WO-A1-99/56720
WO-A1-2010/106181   WO-A1-2012/118939
WO-A1-2014/038078   JP-A- 2014 062 077
US-A1- 2005 215 153

**Description**

La présente invention concerne une composition, en particulier une composition d'encollage pour des produits isolants à base de laine minérale, en particulier de laine de verre ou de roche, contenant un composant glucidique, au moins un acide ou anhydride polycarboxylique et un monoalcool hydrophobe.

La fabrication de produits d'isolation à base de laine minérale comprend généralement une étape de fabrication des fibres de verre ou de roche par un procédé de centrifugation. Sur leur trajet entre le dispositif de centrifugation et le tapis de collecte des fibres, on vaporise sur les fibres encore chaudes une composition aqueuse d'encollage, également appelée liant, qui subit ensuite une réaction de thermodurcissement à des températures d'environ 200 °C.

Les résines phénoliques utilisées pendant plusieurs dizaines d'années en tant que liants sont remplacées de plus en plus par des produits issus de sources renouvelables et n'émettant pas, ou très peu, de formaldéhyde, composé considéré comme pouvant nuire à la santé humaine.

Il est ainsi connu, par exemple de US 2011/0223364, de lier des fibres minérales avec des compositions aqueuses d'encollage exemptes de formaldéhyde contenant, en tant que réactifs thermoréticulables, des hydrates de carbone et des acides polycarboxyliques.

Les compositions d'encollage à base de sucres réducteurs présentent toutefois l'inconvénient de donner lieu à des réactions de coloration (caramélisation, réaction de Maillard) qui rendent difficile, voire impossible, l'obtention de produits de couleur claire.

La Demanderesse a proposé dans ses demandes WO 2010/029266 et WO 2013/014399 des liants non pas à base de sucres réducteurs, mais à base de sucres hydrogénés, également appelés alcools de sucres. Ces réactifs ont une stabilité thermique considérablement plus élevée que les sucres réducteurs et ne donnent pas lieu aux réactions de Maillard et/ou de caramélisation. Les demandes WO2012/118939, WO2010106181 et US20050215153 décrivent des compositions à base de sucres et d'acide polycarboxylique, utilisées par l'encollage de produits isolants à base de laine minérale.

Les produits d'isolation à base de laine minérale et de cette nouvelle génération de liants « verts », sont toutefois relativement hygroscopiques et conservent moins bien leurs propriétés mécaniques au cours du temps que les produits plus colorés fabriqués avec des sucres réducteurs. Pour compenser la perte des propriétés mécaniques après une certaine période de vieillissement de ces produits d'isolation, il est généralement nécessaire d'augmenter la proportion de liant d'environ 10 à 20 %, ce qui augmente non seulement le coût du produit final mais altère également sa réaction au feu.

Au cours de ses recherches visant à améliorer les propriétés mécaniques des produits d'isolation à base de laine minérale encollée avec des liants « incolores », c'est-à-dire fabriqués à partir de sucres hydrogénés, la Demanderesse a constaté avec surprise que certains alcools monovalent hydrophobes, lorsqu'ils sont incorporés dans le liant, conduisent à une amélioration spectaculaire des propriétés mécaniques des produits d'isolation obtenus, et notamment à une excellente reprise d'épaisseur. Cela est vrai pour les liants à base de sucres hydrogénés, mais également, dans une moindre mesure, pour les liants contenant des sucres réducteurs ou non réducteurs.

La présente invention a par conséquent pour objet une composition aqueuse, notamment une composition d'encollage pour produits isolants à base de laine minérale, comprenant

(a) au moins un glucide choisi parmi les sucres hydrogénés, les sucres réducteurs les sucres non réducteurs et les mélanges de ceux-ci,
(b) au moins un acide polycarboxylique ou un sel ou anhydride d'un tel acide, le composant (a) et le composant (b) représentant chacun indépendamment de 30 à 70 % en poids des matières sèches de la composition d'encollage,
(c) de 1 à 25 % en poids, rapporté à la somme des composants (a) et (b), d'au moins un monoalcool aliphatique, cycloaliphatique ou aromatique exempt de fonctions acides ou basiques (Bronsted) et présentant un coefficient de partage octanol/eau (Log Kow) compris entre 1 et 3.

Dans la présente demande le terme « glucide » a un sens plus large qu'usuellement, car il englobe non seulement les glucides au sens stricte, c'est-à-dire les sucres réducteurs ou hydrates de carbone de formule $C_n(H_2O)_p$ présentant au moins un groupe aldéhyde ou cétone (groupe réducteur), mais également les produits d'hydrogénation de ces hydrates de carbone où le groupe aldéhyde ou cétone a été réduit en alcool. Ce terme englobe également les sucres non-réducteurs constitués de plusieurs motifs glucidiques dont les carbones porteurs de l'hydroxyle hémi-acétalique sont impliqués dans les liaisons osidiques reliant les motifs entre eux.

Le composant glucidique (a) de la composition d'encollage selon l'invention peut être constitué uniquement de sucres hydrogénés et être exempt de sucres réducteurs ou non réducteurs. Ce mode de réalisation est intéressant car il conduit à des produits isolants particulièrement peu colorés.

Les produits isolants à base de laine minérale obtenus avec une composition d'encollage présentant une certaine teneur en sucres réducteurs sont relativement plus colorés, mais peuvent présenter un réel intérêt économique lié au faible coût des sucres réducteurs ou de mélanges de sucres incomplètement hydrogénés.

Par « sucre hydrogéné » on entend dans la présente invention l'ensemble des produits résultant de la réduction d'un saccharide choisi parmi les monosaccharides, disaccharides, oligosaccharides et polysaccharides et des mélanges de ces produits.

Le sucre hydrogéné est de préférence un produit d'hydrogénation d'un hydrolysat d'amidon.

Les hydrolysats d'amidon sont des produits obtenus par hydrolyse enzymatique et/ou acide d'amidon. Le degré d'hydrolyse est généralement caractérisé par l'équivalent dextrose (DE), défini par la relation suivante :

$$DE = 100 \times \left( \frac{\text{nombre de liaisons glycosidiques rompues}}{\text{nombre de liaisons glycosidiques dans l'amidon initial}} \right)$$

Les hydrolysats d'amidon préférés ont, avant l'étape d'hydrogénation, un DE compris entre 5 et 99, et avantageusement entre 10 et 80.

L'hydrogénation du saccharide peut être effectuée par les méthodes connues opérant dans des conditions de pression d'hydrogène et de température élevées, en présence d'un catalyseur choisi parmi les éléments des groupes IB, IIB, IVB, VI, VII et VIII du tableau périodique des éléments, de préférence dans le groupe comprenant le nickel, le platine, le palladium, le cobalt, le molybdène et leurs mélanges. Le catalyseur préféré est le nickel de Raney. L'hydrogénation transforme le sucre ou le mélange de sucres (hydrolysat d'amidon) en polyols ou alcools de sucre.

A titre d'exemples de sucres hydrogénés, on peut citer l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon.

On utilisera de préférence les produits d'hydrogénation d'hydrolysats d'amidon.

De préférence, le sucre hydrogéné ou le mélange de sucres hydrogénés est constitué majoritairement, c'est-à-dire à plus de 50 % en poids, de maltitol (produit d'hydrogénation du maltose, dimère de glucose résultant de l'hydrolyse enzymatique de l'amidon).

Le composant glucidique (a) peut être constitué uniquement de sucres réducteurs. Toutefois pour les raisons indiquées en introduction, il contient de préférence une fraction significative de sucres hydrogénés. La proportion de sucres hydrogénés dans le glucide est avantageusement comprise entre 25 et 100 % en poids, et le composant (a) contient alors jusqu'à 75 % en poids d'un ou plusieurs sucres réducteurs, en plus du ou des sucres hydrogénés.

La teneur en sucres hydrogénés du glucide (composant (a)) est de préférence au moins égale à 30 % en poids, en particulier au moins égale à 50 % en poids, et idéalement au moins égale à 70 % en poids.

Les sucres réducteurs englobent les oses (monosaccharides) et osides (disaccharides, oligosaccharides et polysaccharides).

A titre d'exemples de monosaccharides, on peut citer ceux comportant de 3 à 8 atomes de carbone, de préférence les aldoses et avantageusement les aldoses contenant 5 à 7 atomes de carbone. Les aldoses particulièrement préférés sont les aldoses naturels (appartenant à la série D), notamment les hexoses tels que le glucose, le mannose et le galactose.

Le lactose ou le maltose sont des exemples de disaccharides utilisables en tant que sucre réducteur.

Les polysaccharides utilisables pour la présente l'invention ont de préférence une masse molaire moyenne en poids inférieure à 100.000, de préférence inférieure à 50.000, avantageusement inférieure à 10.000.

De préférence, le polysaccharide renferme au moins un motif choisi parmi les aldoses précités, avantageusement le glucose. Sont particulièrement préférés les polysaccharides réducteurs qui sont constitués majoritairement (à plus de 50 % en poids) de motifs de glucose.

Le sucre réducteur peut notamment être un mélange de monosaccharides, d'oligosaccharides et de polysaccharides, notamment une dextrine.

Les dextrines sont des composés répondant à la formule générale $(C_6H_{10}O_5)_n$. Elles sont obtenues par hydrolyse partielle d'amidon. Leur DE est avantageusement compris entre 5 et 99, de préférence entre 10 et 80.

Le sucre non réducteur est de préférence un oligoholoside non réducteur renfermant au plus dix motifs glucidiques.

A titre d'exemples de tels sucres non réducteurs, on peut citer les diholosides tels que le tréhalose, les isotréhaloses, le saccharose et les isosaccharoses (« isosucroses » en anglais), les triholosides tels que le mélézitose, le gentianose, le raffinose, l'erlose et l'umbelliférose, les tétraholosides tels que le stachyose, et les pentaholosides tels que le verbascose.

On préfère le saccharose et le tréhalose, et mieux encore le saccharose.

Le composant (a), à savoir le glucide constitué de sucres hydrogénés et/ou de sucres réducteurs et/ou non-réducteurs, représente de 30 à 70 % en poids, de préférence de 40 à 60 % en poids de matières sèches de la composition d'encollage.

L'acide polycarboxylique peut être un acide polymère ou un acide monomère.

Pour limiter la viscosité de la composition d'encollage, cet acide polycarboxylique présente avantageusement une masse molaire moyenne en nombre inférieure ou égale à 50000, de préférence inférieure ou égale à 10000 et avantageusement inférieure ou égale à 5000.

On peut citer à titre d'exemples d'acides polycarboxyliques polymères, les homopolymères et copolymères obtenus à partir de monomères portant au moins un groupe acide carboxylique tel que l'acide (méth)acrylique, l'acide crotonique, l'acide isocrotonique, l'acide maléique, l'acide cinnamique, l'acide 2-méthylmaléique, l'acide fumarique, l'acide itaconique, l'acide 2-méthylitaconique, l'acide $\alpha,\beta$-méthylèneglutarique et les monoesters d'acide dicarboxylique insaturés, tels que les maléates et les fumarates d'alkyle en $C_1$-$C_{10}$. Les copolymères peuvent contenir en outre un ou plusieurs monomères vinyliques ou acryliques tels que l'acétate de vinyle, le styrène substitué ou non par des groupements alkyle, hydroxyle ou sulfonyle, ou par un atome d'halogène, le (méth)acrylonitrile, le (méth)acrylamide, les (méth)acrylates alkyle en $C_1$-$C_{10}$, notamment le (méth)acrylate de méthyle, le (méth)acrylate d'éthyle, le (méth)acrylate de n-butyle et le (méth)acrylate d'isobutyle.

Le composant (b) est de préférence un acide polycarboxylique monomère. Il peut s'agir d'un acide dicarboxylique, tricarboxylique ou tetracarboxylique.

Les acides dicarboxyliques englobent, par exemple, l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, notamment contenant au moins un atome de bore ou de chlore, l'acide tétrahydrophtalique et ses dérivés, notamment contenant au moins un atome de chlore tel que l'acide chlorendique, l'acide isophtalique, l'acide téréphtalique, l'acide mésaconique et l'acide citraconique.

Les acides tricarboxyliques englobent, par exemple, l'acide citrique, l'acide tricarballylique, l'acide 1,2,4-butanetricarboxylique, l'acide aconitique, l'acide hémimellitique, l'acide triméllitique et l'acide trimésique ;

On peut citer comme acide tétracarboxylique, par exemple l'acide 1,2,3,4-butanetétracarboxylique et l'acide pyroméllitique.

On utilisera de préférence l'acide citrique.

Le composant (b) représente de 30 à 70 % en poids, de préférence de 40 à 60 % en poids de matières sèches de la composition d'encollage de la présente invention.

Le rapport en poids du composant (a) au composant (b) est de préférence compris entre 70/30 et 30/70, en particulier entre 60/40 et 40/60.

Le composant (c) de la composition d'encollage est un alcool monovalent relativement hydrophobe, c'est-à-dire un composé comportant une seule fonction C-OH et présentant un coefficient de partage octanol/eau (logP) supérieur à 1. Le coefficient de partage octanol/eau d'une substance pure X, également appelé *log P* ou *Log Kow* (de l'anglais Log $K_{octanol/water}$), est le logarithme du rapport P défini par la formule suivante :

$$P = [X]_{octanol}/[X]_{aqueuse}$$

où

[X]$_{octanol}$ est la concentration de X dans l'octanol saturé d'eau et
[X]$_{aqueuse}$ est la concentration de X dans l'eau saturée d'octanol
les deux phases étant à température ambiante et en contact l'une avec l'autre.

Lorsque ce coefficient de partage a une valeur positive, la solubilité dans l'octanol de la substance X est supérieure à celle dans l'eau. Plus la valeur du coefficient de partage est élevée, plus un composé est considéré comme hydrophobe. On pourra se référer par exemple à l'article de James Sangster intitulé « Octanol-Water Partition Coefficients of Simple Organic Compounds » dans J. Phys. Chem. Ref. Data, Vol. 18, No. 1989, qui contient des tables indiquant la valeur du logP de plus de 600 composés organiques purs.

Les monoalcools de la présente invention sont dépourvus de fonctions acides ou basiques, autrement dit il s'agit de molécules non ionisables dans l'eau. De façon avantageuse, la valeur de leur coefficient de partage ne dépend ainsi pas du pH de la phase aqueuse du système biphasique octanol/eau.

La Demanderesse pense que le composant (c) fonctionne comme un agent hydrophobe réagissant avec les composants (a) et/ou (b) et réduisant ainsi le caractère hydrophile et/ou hygroscopique du produit d'isolation final obtenu après réticulation du liant. Pour être efficace, ce composant doit à la fois avoir un coefficient de partage élevé et être suffisamment soluble dans la composition d'encollage aqueuse pour réagir avec les fonctions carboxyle et/ou hydroxyle des composants (a) et (b).

Le coefficient de partage octanol/eau (logP) du composant (c) est de préférence compris entre 1,05 et 2,0, en particulier entre 1,1 et 1,5. Lorsque le composant (c) contient plusieurs monoalcools, la valeur du logP de chacune de ces substances pures doit être comprise dans les fourchettes indiquées ci-dessus.

L'utilisation de monoalcool ayant un coefficient de partage inférieur à 3, voire inférieur à 2 est en outre avantageuse pour des raisons sanitaires et environnementales, les substances présentant un caractère trop hydrophobe ayant tendance à s'accumuler dans les tissus adipeux.

La concentration du composant (c) dans la composition d'encollage de la présente invention est de préférence comprise entre 1,5 et 10 % en poids, en particulier entre 2 et 8 % en poids, rapportée à la somme des composants (a) et (b).

On utilisera de préférence un monoalcool aliphatique ou cycloaliphatique, principalement pour des raisons de réactivité. Les alcools aromatiques (phénols) sont en effet moins réactifs que les alcools (cyclo)aliphatiques, mais pourraient être utilisés notamment en combinaison avec un composant (b) contenant des fonctions carboxyliques activées, telles que des fonctions anhydrides.

On peut citer à titre d'exemples de monoalcools appropriés pour la présente invention le 1-pentanol, 3-méthyl-1-butanol, 2,2-diméthyl-1-propanol, 2-pentanol, 3-pentanol, 3-méthyl-2-butanol, 2-méthyl-2-butanol, 2-éthyl-2-propanol, phénol, cyclohexanol, 1-hexanol, 2-hexanol, 3-hexanol, 3,3-diméthyl-2-butanol, alcool benzylique, 2-méthylphénol, 3-méthylphénol, 4-méthylphénol, cis-2-méthylcyclohexanol, trans-2-méthylcyclohexanol, 4-méthylcyclohexanol, 1-heptanol, 2-heptanol, 3-heptanol, 4-heptanol, alcool 3-méthylbenzylique, alcool 4-méthylbenzylique, 2-éthylphénol, 3-éthylphénol, 4-éthylphénol, 1-phényléthanol, 2-phényléthanol, 2,4-diméthylphénol, 2,5-diméthylphénol, 2,6-diméthylphénol, 3,4-diméthylphénol, 3,5-diméthylphénol, 2,6-diméthylcyclohexanol, 1-octanol, 2-octanol, 4-octanol, 3-phényl-2-propén-1-ol, 3-phényl-1-propanol, 2-n-propylphénol, 4-n-propylphénol, 2-isopropylphénol, 2,3,6-triméthylphénol, 2,4,6-triméthylphénol, 1-naphtol, 2-naphtol, 7-phényl-4,6-diyn-hept-2-en-1-ol, diphénylméthanol, 2-chlorophénol, 3-chlorophénol, 4-chlorophénol, 2,4-dichlorophénol, 2,5-dichlorophénol, 2,6-dichlorophénol, 1-phénoxy-2-éthanol.

La Demanderesse a obtenus d'excellents résultats avec le 1-phénoxy-2-éthanol.

La composition d'encollage comprend en outre de préférence un catalyseur d'estérification qui peut être choisi parmi les bases et les acides de Lewis, tels que les argiles, la silice colloïdale ou non, les amines organiques, les ammoniums quaternaires, les oxydes métalliques, les sulfates métalliques, les chlorures métalliques, les sulfates d'urée, les chlorures d'urée et les catalyseurs à base de silicates.

Le catalyseur peut également être un composé contenant du phosphore, par exemple un hypophosphite de métal alcalin, un phosphite de métal alcalin, un polyphosphate de métal alcalin, un hydrogénophosphate de métal alcalin, un acide phosphorique ou un acide alkylphosphonique. De préférence, le métal alcalin est le sodium ou le potassium.

Le catalyseur peut encore être un composé contenant du fluor et du bore, par exemple l'acide tétrafluoroborique ou un sel de cet acide, notamment un tétrafluoroborate de métal alcalin tel que le sodium ou le potassium, un tétrafluoroborate de métal alcalino-terreux tel que le calcium ou le magnésium, un tétrafluoroborate de zinc et un tétrafluoroborate d'ammonium.

De préférence, le catalyseur est l'hypophosphite de sodium, le phosphite de sodium ou un mélange de ces composés.

La quantité de catalyseur introduite dans la composition d'encollage représente généralement au plus 20 % en poids, avantageusement de 1 à 10 % en poids, rapporté au poids total des composants (a) et (b).

La composition d'encollage conforme à l'invention peut comprendre en outre les additifs conventionnels ci-après dans les proportions suivantes calculées sur la base de 100 parts en poids de composant (a) + (b) :

de 0 à 2 parts de silane, en particulier un aminosilane,
de 0 à 40 parts, de préférence de 4 à 25 parts, d'une huile ou émulsion d'huile,
de 0 à 5 parts d'une silicone,
de 0 à 20 parts d'un polyol différent des sucres hydrogénés,
de 0 à 30 parts d'urée, de préférence 0 à 20 parts,
de 0 à 30 parts d'une charge d'extension (*extender*) choisie parmi les dérivés de la lignine tels que le lignosulfonate d'ammonium (LSA) ou le lignosulfonate de sodium, et les protéines animales ou végétales.

Le rôle des additifs est connu et brièvement rappelé :
Le silane est un agent de couplage capable de réagir à la fois avec la surface des fibres et avec les composants du liant.

Les huiles sont des agents anti-poussières et des agents hydrophobes ; l'urée joue le rôle de plastifiant et permet en outre d'ajuster le temps de gel de la composition d'encollage afin d'éviter les problèmes de pré-gélification ; la charge d'extension est une charge organique soluble ou dispersible dans la composition d'encollage qui permet notamment de diminuer le coût de celle-ci.

La silicone réactive est de préférence un polydiorganosiloxane portant au moins une fonction hydroxyle (silanol), carboxyle, anhydride, amine, epoxy ou vinyle apte à réagir avec l'un au moins des constituants de la composition d'encollage et/ou avec les groupes silanol de la surface du verre. La silicone réactive est de préférence liquide à température ambiante. Sa masse molaire moyenne est généralement inférieure ou égale à 50 000, de préférence inférieure ou égale à 10 000.

De préférence, la silicone réactive comprend une fonction réactive, avantageusement une fonction silanol, à chacune de ses extrémités de chaîne.

La fonction réactive de la silicone réactive peut être bloquée par un groupement protecteur qui libère ladite fonction réactive sous l'effet de la chaleur. La proportion de silicone réactive dans la composition d'encollage varie généralement de 0,1 à 5 parts, de préférence de 0,3 à 3 parts, avantageusement de 0,5 à 2,5 parts et mieux encore de 0,7 à 1,8 part en poids, pour 100 parts en poids de la somme des composants (a) et (b).

La préparation de la composition d'encollage est effectuée par simple mélange des constituants précités avec de l'eau.

La composition d'encollage est destinée à être appliquée sur des fibres minérales, notamment des fibres de verre ou de roche.

La présente invention a également pour objet un procédé de fabrication d'un produit isolant à base de laine minérale, comprenant

- l'application d'une composition aqueuse d'encollage telle que décrite ci-dessus sur des fibres de laine minérale, et
- l'évaporation de la phase solvant de la composition aqueuse d'encollage et le durcissement thermique du résidu non volatile de la composition.

De manière classique, la composition d'encollage est projetée par pulvérisation sur les fibres minérales à la sortie du dispositif centrifuge et avant leur collecte sur l'organe récepteur sous la forme d'une nappe de fibres qui est ensuite traitée à une température permettant la réticulation de l'encollage et la formation d'un liant infusible. La réticulation de l'encollage selon l'invention se fait à une température comparable à celle d'une résine formol-phénolique classique, à une température supérieure ou égale à 110°C, de préférence supérieure ou égale à 130°, et avantageusement supérieure ou égale à 140°C.

La composition d'encollage a avantageusement un pH compris entre 2 et 4, en particulier entre 2,5 et 3,5, idéalement proche de 3.

Les produits isolants acoustiques et/ou thermiques obtenus par le procédé selon l'invention à partir de ces fibres encollées constituent aussi un objet de la présente invention.

Ces produits se présentent généralement sous la forme d'un matelas ou d'un feutre de laine minérale, de verre ou de roche, ou encore d'un voile de fibres minérales, également de verre ou de roche, destiné notamment à former un revêtement de surface dudit matelas ou dudit feutre. Lorsque le composant (a) contient une très faible proportion de sucres réducteurs, les produits présentent une couleur blanche particulièrement avantageuse.

En outre, les produits isolants présentent une grande résistance au développement de microorganismes, notamment de moisissures, qui est due au caractère non-fermentescible des sucres hydrogénés.

### Exemple 1

On prépare des compositions d'encollage comprenant les constituants figurant dans le Tableau 1 exprimés en parts pondérales.

Les compositions d'encollage sont préparées en introduisant, dans un récipient, de l'eau (environ 80 % de la composition finale), le sucre hydrogéné (sirop de maltitol), l'acide citrique, l'hypophosphite de sodium (catalyseur), l'émulsion d'huile anti-poussière, l'émulsion de silicone, et le 1-phénoxy-2-éthanol sous une agitation vigoureuse.

On fabrique de la laine de verre par la technique de la centrifugation interne dans laquelle la composition de verre fondu est transformée en fibres au moyen d'un outil dénommé « assiette de centrifugation », comprenant un panier formant chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

De façon classique, une couronne de pulvérisation d'encollage est disposée au-dessous de l'assiette de fibrage de façon à répartir régulièrement la composition d'encollage sur la laine de verre venant d'être formée.

La laine minérale ainsi encollée est collectée sur un convoyeur à bande équipé de caissons d'aspiration internes qui retiennent la laine minérale sous forme d'un feutre ou d'une nappe à la surface du convoyeur. Le convoyeur circule ensuite dans une étuve maintenue à 270°C où les constituants de l'encollage polymérisent pour former un liant. Le produit isolant obtenu présente une largeur de 2,4 m, une densité nominale égale à 17,5 kg/m$^3$, une épaisseur nominale d'environ 82 mm et une perte au feu de l'ordre de 5 %.

Les propriétés des compositions d'encollage figurant dans le Tableau 1 suivant sont évaluées comparativement à une composition d'encollage classique renfermant une résine formol-phénolique et de l'urée (Référence) préparée conformément à l'exemple 2, essai 1 de WO01/96254 A1.

La résistance en traction est mesurée selon la norme ASTM C 686-71T sur un échantillon découpé par estampage dans le produit isolant. L'échantillon a la forme d'un anneau de 122 mm de longueur, 46 mm de largeur, un rayon de courbure de la découpe du bord extérieur égal à 38 mm et un rayon de courbure de la découpe du bord intérieur égal à 12,5 mm.

L'échantillon est disposé entre deux mandrins cylindriques d'une machine d'essais dont l'un est mobile et se déplace à vitesse constante. On mesure la force de rupture F de l'échantillon et on calcule la résistance en traction RT, définie par le rapport de la force de rupture F (en Newton) à la masse de l'échantillon (en grammes).

La « reprise d'épaisseur » indique l'élasticité en compression du produit final. Pour la mesurer on applique, pendant un temps donné - en l'occurrence 90 jours - une pression de compression telle que l'épaisseur soit réduite à 1/4,8 de sa valeur initiale. Après relâchement de cette pression de compression, on mesure de nouveau l'épaisseur. La reprise d'épaisseur est le rapport, exprimé en %, de l'épaisseur mesurée après relâchement de la pression de compression à l'épaisseur initiale.

La résistance en traction (RT) est mesurée immédiatement après la fabrication (RT avant vieillissement) et après un vieillissement accéléré dans un autoclave à une température de 105°C sous 100 % d'humidité relative pendant 15 minutes (RT après vieillissement).

**Tableau 1**

| Echantillon | 1 | 2* | Référence |
|---|---|---|---|
| Résine phénolique | - | - | 100 |
| Sucre hydrogéné (Maltilite® 5575) | 48 | 43,2 | - |
| Acide citrique | 52 | 50 | - |
| Hypophosphite de sodium | 5 | 5 | - |
| Emulsion d'huile anti-poussière (HydroWax® 88) | 9,5 | 9.5 | 9,5 |
| Sulfate d'ammonium | - | - | 3 |
| Emulsion de silicone (DC1581) | 2,1 | 2,1 | - |
| Aminosilane | 0,5 | - | 0,5 |
| Phénoxy-2-éthanol | - | 6,8 | - |
| RT (en N/g) | | | |
| Avant vieillissement | 3,5 / 5,3 | 3,8 / 5,3 | 4,2 / 5,1 |
| Après vieillissement | 2,7 / 3,4 | 2,7 / 3,4 | 3,7 / 4,6 |
| Perte au feu | 5,2 / 5,2 | 5,2 / 5,2 | 4,7 / 4,7 |
| Reprise d'épaisseur (%) | | | |
| Après 90 jours | 95,2 / 97,8 | 98,1 / 101,5 | 97,9 / 100,8 |
| *selon l'invention | | | |

Tous les essais ont été réalisés deux fois et le Tableau 1 indique séparément les résultats des deux séries d'essais.

On peut constater que la reprise en épaisseur de l'échantillon 2, préparé conformément à l'invention, présente une reprise en épaisseur après 90 jours supérieure à celle de l'échantillon de référence, tandis que la reprise en épaisseur de l'échantillon comparatif 1 est inférieure d'environ 2 à 3 % à celle de l'échantillon de référence.

Ces résultats montrent que l'utilisation de 6,8 % en poids de phénoxyéthanol permet d'améliorer significativement la reprise en épaisseur d'un matelas de laine minérale fabriqué avec un liant hydrophile à base de sucres hydrogénés. L'utilisation du phénoxyéthanol ne semble pas avoir d'influence sur la résistance en traction avant ou après vieillissement.

**Revendications**

1. Composition aqueuse d'encollage pour produits isolants à base de laine minérale, comprenant

   (a) au moins un glucide choisi parmi les sucres hydrogénés, les sucres réducteurs, les sucres non-réducteurs et les mélanges de ceux-ci,
   (b) au moins un acide polycarboxylique ou un sel ou anhydride d'un tel acide,
   le composant (a) et le composant (b) représentant chacun indépendamment de 30 à 70 % en poids des matières sèches de la composition d'encollage,
   (c) de 1 à 25 % en poids, rapporté à la somme des composants (a) et (b), d'au moins un monoalcool aliphatique, cycloaliphatique ou aromatique exempt de fonctions acides ou basiques et présentant un coefficient de partage octanol/eau (Log Kow) compris entre 1 et 3.

2. Composition selon la revendication 1, **caractérisé par le fait que** la concentration du monoalcool (c) est comprise entre 1,5 à 10 % en poids, de préférence entre 2 et 8 % en poids, rapportée à la somme des composants (a) et (b).

3. Composition selon la revendication 1 ou 2, **caractérisée par le fait que** le coefficient de partage octanol/eau est compris entre 1,05 et 2,0, de préférence entre 1,1 et 1,5.

4. Composition selon l'une quelconque des revendications précédentes, **caractérisée par le fait que** le monoalcool est choisi parmi les monoalcools aliphatiques et cycloaliphatiques.

5. Composition selon l'une quelconque des revendications 1 à 3, **caractérisée par le fait que** le monoalcool comporte au moins un cycle aromatique.

6. Composition selon la revendication 5, **caractérisée par le fait que** le monoalcool est le phénoxy-2-éthanol.

7. Composition selon l'une quelconque des revendications précédentes, **caractérisée par le fait que** l'acide polycarboxylique est un acide polycarboxylique monomère.

8. Composition selon l'une des revendications précédentes, **caractérisé par le fait que** l'acide porycarboxylique est l'acide citrique.

9. Composition selon la revendication 1, **caractérisée par le fait que** la proportion de sucres hydrogénés dans le glucide est comprise entre 25 et 100 % en poids.

10. Composition selon la revendication 8, **caractérisée par le fait que** le glucide contient au moins 30 % en poids, de préférence au moins 50 % en poids, et en particulier au moins 70 % en poids de sucres hydrogénés.

11. Composition selon l'une des revendications précédentes, **caractérisée par le fait que** le sucre hydrogéné est choisi parmi les produits d'hydrogénation des monosaccharides, disaccharides, oligosaccharides et polysaccharides et leur mélanges.

12. Composition selon l'une quelconque des revendications précédentes, **caractérisée par le fait que** le sucre hydrogéné est un produit d'hydrogénation d'un hydrolysat d'amidon.

13. Procédé de fabrication d'un produit isolant à base de laine minérale, comprenant

   - l'application d'une composition aqueuse d'encollage selon l'une quelconque des revendications précédentes sur des fibres de laine minérale,
   - l'évaporation de la phase solvant de la composition aqueuse d'encollage et le durcissement thermique du résidu non volatile de la composition.

14. Produit isolant acoustique et/ou thermique obtenu par le procédé selon la revendication 13.

**Patentansprüche**

1. Wässrige Bindemittelzusammensetzung für isolierende Produkte auf Basis von Mineralwolle, umfassend

   (a) mindestens ein Kohlenhydrat, ausgewählt aus hydrierten Zuckern, reduzierenden Zuckern, nicht reduzierenden Zuckern und Mischungen davon,
   (b) mindestens eine Polycarbonsäure oder ein Salz oder ein Anhydrid einer solchen Säure,
   wobei Bestandteil (a) und Bestandteil (b) jeweils unabhängig 30 bis 70 Gew.-% der Trockenmasse der Schlichtezusammensetzung darstellen,
   (c) 1 bis 25 Gew.-%, bezogen auf die Summe der Bestandteile (a) und (b), mindestens eines aliphatischen, cycloaliphatischen oder aromatischen Monoalkohols ohne Säure- oder Basenfunktionen, der einen Octanol-Wasser-Verteilungskoeffizienten (Log Kow) zwischen 1 und 3 aufweist.

2. Zusammensetzung nach Anspruch 1, **dadurch gekennzeichnet, dass** die Konzentration des Monoalkohols (c) zwischen 1,5 und 10 Gew.-%, vorzugsweise zwischen 2 und 8 Gew.-% liegt, bezogen auf die Summe der Bestandteile (a) und (b).

3. Zusammensetzung nach Anspruch 1 oder 2, **dadurch gekennzeichnet, dass** der Octanol-Wasser-Verteilungskoeffizient zwischen 1,05 und 2,0, vorzugsweise zwischen 1,1 und 1,5 liegt.

4. Zusammensetzung nach einem der vorangehenden Ansprüche, **dadurch gekennzeichnet, dass** der Monoalkohol aus den aliphatischen und cycloaliphatischen Monoalkoholen ausgewählt ist.

5. Zusammensetzung nach einem der Ansprüche 1 bis 3, **dadurch gekennzeichnet, dass** der Monoalkohol mindestens einen aromatischen Ring enthält.

6. Zusammensetzung nach Anspruch 5, **dadurch gekennzeichnet, dass** der Monoalkohol Phenoxy-2-ethanol ist.

7. Zusammensetzung nach einem der vorangehenden Ansprüche, **dadurch gekennzeichnet, dass** die Polycarbonsäure eine monomere Polycarbonsäure ist.

8. Zusammensetzung nach einem der vorangehenden Ansprüche, **dadurch gekennzeichnet, dass** die Polycarbonsäure Citronensäure ist.

9. Zusammensetzung nach Anspruch 1, **dadurch gekennzeichnet, dass** der Anteil hydrierter Zucker im Kohlenhydrat zwischen 25 und 100 Gew.-% liegt.

10. Zusammensetzung nach Anspruch 8, **dadurch gekennzeichnet, dass** das Kohlenhydrat mindestens 30 Gew.-%, bevorzugt mindestens 50 Gew.-% und insbesondere mindestens 70 Gew.-% an hydrierten Zuckern enthält.

11. Zusammensetzung nach einem der vorangehenden Ansprüche, **dadurch gekennzeichnet, dass** der hydrierte Zucker ausgewählt ist aus den Hydrierungsprodukten von Monosacchariden, Disacchariden, Oligosacchariden und Polysacchariden und deren Gemischen.

12. Zusammensetzung nach einem der vorangehenden Ansprüche, **dadurch gekennzeichnet, dass** der hydrierte Zucker ein Hydrierungsprodukt eines Stärkehydrolysats ist.

13. Herstellungsverfahren für ein isolierendes Produkt auf Basis von Mineralwolle, umfassend

    - die Anwendung einer wässrigen Bindemittelzusammensetzung nach einem der vorangehenden Ansprüche auf Mineralwollefasern,
    - die Verdampfung der Lösungsmittelphase der wässrigen Bindemittelzusammensetzung und das thermische Aushärten des nichtflüchtigen Rückstands der Zusammensetzung.

14. Schall- und/oder wärmeisolierendes Produkt, erhalten durch das Verfahren nach Anspruch 13.

**Claims**

1. An aqueous sizing composition for insulating products based on mineral wool, comprising

   (a) at least one carbohydrate chosen from hydrogenated sugars, reducing sugars, non-reducing sugars and mixtures thereof,
   (b) at least one polycarboxylic acid or a salt or anhydride of such an acid, the component (a) and the component (b) each representing independently from 30 to 70 % by weight of solids of the sizing composition,
   (c) from 1% to 25% by weight, relative to the sum of the components (a) and (b), of at least one aliphatic, cycloaliphatic or aromatic monoalcohol free of acid or base functions and having an octanol/water partition coefficient (Log Kow) of between 1 and 3.

2. The composition as claimed in claim 1, **characterized in that** the concentration of the monoalcohol (c) is between 1.5% and 10% by weight and preferably between 2% and 8% by weight, relative to the sum of components (a) and (b).

3. The composition as claimed in claim 1 or 2, **characterized in that** the octanol/water partition coefficient is between 1.05 and 2.0 and preferably between 1.1 and 1.5.

4. The composition as claimed in any one of the preceding claims, **characterized in that** the monoalcohol is chosen from aliphatic and cycloaliphatic monoalcohols.

5. The composition as claimed in any one of claims 1 - 3, **characterized in that** the monoalcohol comprises at least one aromatic ring.

6. The composition as claimed in claim 5, **characterized in that** the monoalcohol is 2-phenoxyethanol.

7. The composition as claimed in any one of the preceding claims, **characterized in that** the polycarboxylic acid is a polycarboxylic acid monomer.

8. The composition as claimed in one of the preceding claims, **characterized in that** the polycarboxylic acid is citric acid.

9. The composition as claimed in claim 1, **characterized in that** the proportion of hydrogenated sugars in the carbohydrate is between 25% and 100% by weight.

10. The composition as claimed in claim 8, **characterized in that** the carbohydrate contains at least 30% by weight, preferably at least 50% by weight and in particular at least 70% by weight of hydrogenated sugars.

11. The composition as claimed in one of the preceding claims, **characterized in that** the hydrogenated sugar is chosen from the hydrogenation products of monosaccharides, disaccharides, oligosaccharides and polysaccharides, and mixtures thereof.

12. The composition as claimed in any one of the preceding claims, **characterized in that** the hydrogenated sugar is a product of hydrogenation of a starch hydrolyzate.

13. A process for manufacturing an insulating product based on mineral wool, comprising

   - the application of an aqueous sizing composition as claimed in any one of the preceding claims to mineral wool fibers,
   - evaporation of the solvent phase of the aqueous sizing composition and thermal hardening of the non-volatile residue of the composition.

14. A sound-insulating and/or heat-insulating product obtained via the process as claimed in claim 13.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110223364 A
- WO 2010029266 A
- WO 2013014399 A
- WO 2012118939 A
- WO 2010106181 A
- US 20050215153 A
- WO 0196254 A1

**Littérature non-brevet citée dans la description**

- **JAMES SANGSTER.** Octanol-Water Partition Coefficients of Simple Organic Compounds. *J. Phys. Chem. Ref. Data,* vol. 18 (1989